(19) Europäisches Patentamt / European Patent Office / Office européen des brevets

(11) **EP 2 864 616 B1**

(12) **FASCICULE DE BREVET EUROPEEN**

(45) Date de publication et mention de la délivrance du brevet:
**03.10.2018 Bulletin 2018/40**

(21) Numéro de dépôt: **13731411.8**

(22) Date de dépôt: **11.06.2013**

(51) Int Cl.:
*F02C 9/28* (2006.01)    *F02C 9/44* (2006.01)

(86) Numéro de dépôt international:
**PCT/FR2013/051359**

(87) Numéro de publication internationale:
**WO 2013/190218 (27.12.2013 Gazette 2013/52)**

(54) **PROCÉDÉ D'AJUSTEMENT D'UNE VALEUR DE CONSIGNE D'UN PARAMÈTRE INFLUENÇANT UNE POUSSÉE D'UN MOTEUR À TURBINE À GAZ**

VERFAHREN ZUR EINSTELLUNG EINES REFERENZWERTS EINES PARAMETERS ZUR BEEINFLUSSUNG DES SCHUBS EINES GASTURBINENTRIEBWERKS

METHOD FOR ADJUSTING A REFERENCE VALUE OF A PARAMETER THAT INFLUENCES THE THRUST OF A GAS TURBINE ENGINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.06.2012 FR 1201751**

(43) Date de publication de la demande:
**29.04.2015 Bulletin 2015/18**

(73) Titulaire: **Safran Aircraft Engines**
**75015 Paris (FR)**

(72) Inventeurs:
• **BELGHAGI, Hichem**
  **F-77550 Moissy-Cramayel Cedex (FR)**
• **CLERMONTE, Sylvain**
  **F-77550 Moissy-Cramayel Cedex (FR)**
• **GARIN, Laurence**
  **F-77550 Moissy-Cramayel Cedex (FR)**

(74) Mandataire: **Fontenelle, Sandrine et al**
  **Cabinet Beau de Loménie**
  **158, rue de l'Université**
  **75340 Paris Cedex 07 (FR)**

(56) Documents cités:
**EP-A1- 0 198 751       FR-A1- 2 890 939**
**US-A1- 2004 267 414    US-A1- 2009 222 187**

**Description**

Arrière-plan de l'invention

La présente invention se rapporte au domaine général de l'aéronautique.

Elle concerne plus particulièrement la régulation de la poussée (i.e. de la force propulsive) d'un moteur à turbine à gaz équipant un aéronef, lors d'une phase de vol de l'aéronef telle que par exemple une phase de décollage.

L'invention a une application privilégiée dans un contexte dans lequel on envisage de réduire, lors d'une phase de vol de l'aéronef, la poussée du moteur à turbine à gaz par rapport à une poussée « limite » de référence normalement prévue pour cette phase de vol (par exemple lors de la phase de décollage, par rapport à une poussée « Plein Gaz Post Combustion » ou PGPC).

Cette réduction de la poussée, aussi connue sous le nom de « détarage de la poussée », présente plusieurs avantages.

Ainsi, en premier lieu, le bruit occasionné par le moteur lors de la phase de vol est réduit.

Par ailleurs, la réduction de la poussée permet de limiter les contraintes exercées sur les éléments du moteur, notamment en abaissant la température des gaz d'échappement en sortie des parties chaudes du moteur (après la chambre de combustion) : la fiabilité et la durée de vie de ces éléments est ainsi augmentée.

La consommation en carburant du moteur est également diminuée.

Le détarage de la poussée est une fonction couramment mise en oeuvre dans l'aviation civile lors de la phase de décollage, pour des moteurs de type turboréacteurs à double flux (ou turbofan). Il se traduit par un allégement de la consigne de régime moteur fournie au turboréacteur par le dispositif de régulation pleine autorité du moteur aussi connu sous le nom de FADEC (« Full Authority Digital Engine Control »)

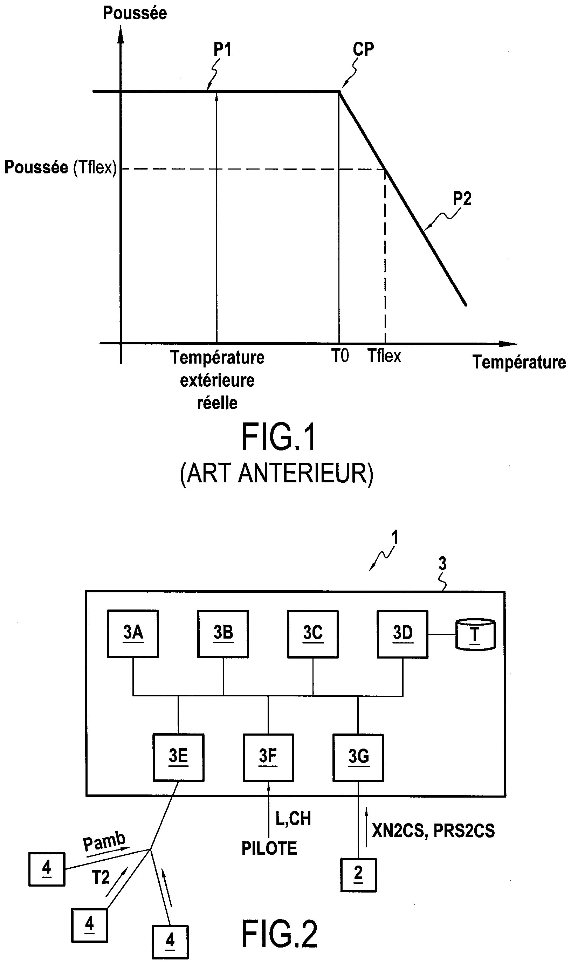

Pour un turboréacteur à double flux, la consigne de poussée fournie par le dispositif de régulation du moteur lors de la phase de décollage de l'aéronef peut être modélisée en fonction de la température extérieure, comme illustrée à la **figure 1.**

Elle se présente sous la forme de deux portions de courbes P1 et P2 quasi linéaires et de pentes distinctes, reliées par un point remarquable CP ou point de rupture. Le point de rupture a pour abscisse sur la figure 1 la température limite T0.

Conformément à la loi illustrée à la figure 1, la régulation de la poussée par le dispositif de régulation du turboréacteur est telle que pour une température extérieure reportée supérieure à la température limite T0, le système de régulation diminue la consigne de poussée (i.e. le régime du turboréacteur) afin de limiter la température des gaz de sortie du turboréacteur.

Compte tenu de ce fonctionnement du dispositif de régulation, un mécanisme connu de détarage de la poussée consiste à leurrer le dispositif de régulation du moteur en lui indiquant une température extérieure supérieure à sa valeur réelle et notamment, supérieure à la température limite T0. De cette sorte, le dispositif de régulation élabore une consigne de poussée du moteur au décollage réduite par rapport à la consigne « Plein Gaz Post Combustion », en conformité avec la loi de régulation modélisée à la figure 1.

La température extérieure destinée à leurrer le dispositif de régulation est aussi connue sous l'appellation de température « flex » (ou Tflex). Elle est fournie par le pilote au système de régulation et est déterminée à partir de tables préétablies pour différentes conditions de vol (type d'avion, piste, charge de l'avion, vent, etc.). Le pilote active (respectivement désactive) le passage à un fonctionnement du moteur en poussée réduite par simple action sur la manette de pilotage de l'avion, de façon connue en soi (par exemple en positionnant cette manette dans une position déterminée).

L'inconvénient de ce mécanisme de détarage de la poussée est qu'il se limite aux moteurs à turbine à gaz présentant une loi de régulation de la poussée en fonction de la température extérieure similaire à celle représentée sur la figure 1, c'est-à-dire présentant un point de rupture au-delà duquel la consigne de poussée élaborée par le système de régulation est réduite.

Or, il existe des moteurs à turbine à gaz pour lesquels une telle modélisation ne convient pas (du fait par exemple de l'absence de point de rupture), et pour lesquels il n'est pas suffisant de biaiser la température extérieure pour pouvoir réduire la poussée de manière maitrisée, c'est-à-dire d'un facteur de réduction connu. Un exemple d'un tel moteur est notamment un moteur à turbine à gaz disposant d'une tuyère d'éjection des gaz d'échappement à section variable.

Il existe donc un besoin d'un mécanisme alternatif permettant de réduire la poussée d'un moteur à turbine à gaz par rapport à une poussée limite de référence et pouvant s'adapter à différents types de moteurs à turbine à gaz, ceux-ci pouvant présenter un ou plusieurs degrés de liberté pour réguler la poussée (ex. régime du moteur, section de la tuyère, poussée limite de référence, etc.).

Le document FR 2890939 A1 présente un procédé de détarage connu. Le document US 2009/222187 A1 présente un procédé de détermination d'une poussée maximale utilisant des tables de données préétablies.

Objet et résumé de l'invention

La présente invention répond notamment à ce besoin en proposant, selon la revendication 1, un procédé d'ajustement d'une valeur de consigne d'au moins un paramètre influençant une poussée d'un moteur à turbine à gaz propulsant un aéronef lors d'une phase de vol de cet aéronef, ce procédé comprenant :

- une étape d'obtention d'une valeur courante d'au moins une variable de fonctionnement du moteur ;
- une étape d'extraction d'une table préétablie, d'une valeur de décrément pour ledit au moins un paramètre associée à la valeur courante de ladite au moins une variable de fonctionnement du moteur ; et
- une étape d'ajustement de la valeur de consigne dudit au moins un paramètre en lui appliquant la valeur de décrément extraite de la table.

Corrélativement, un dispositif d'ajustement d'une valeur de consigne d'au moins un paramètre influençant une poussée d'un moteur à turbine à gaz propulsant un aéronef lors d'une phase de vol de cet aéronef est également présenté sans faire partie de l'invention revendiquée, ce dispositif comprenant :

- des moyens d'obtention d'une valeur courante d'au moins une variable de fonctionnement du moteur ;
- des moyens pour extraire d'une table préétablie, une valeur de décrément pour ledit au moins un paramètre associée à la valeur courante de ladite au moins une variable de fonctionnement du moteur ; et
- des moyens d'ajustement de la valeur de consigne dudit au moins un paramètre en lui appliquant la valeur de décrément extraite de la table.

L'invention propose ainsi une solution simple pour réduire la poussée d'un moteur à turbine à gaz lors d'une phase de vol basée sur une table préétablie fournissant, en fonction d'une ou de plusieurs variables de fonctionnement du moteur, des valeurs de décrément à appliquer sur les valeurs de consigne fournies par le dispositif de régulation du moteur et relatives aux différents degrés de liberté du turboréacteur influençant la poussée.

Ces degrés de liberté ou paramètres influençant la poussée peuvent être notamment, lorsque le moteur est un turboréacteur :

- une vitesse de rotation d'un compresseur du turboréacteur ;
- une marge au pompage de ce compresseur ; et/ou
- une richesse d'un mélange de combustion du turboréacteur.

L'invention peut ainsi s'appliquer à différents types de moteur à turbine à gaz, caractérisés par un ou plusieurs degrés de liberté, dès lors qu'une telle table est établie.

Cette table peut être établie aisément de façon expérimentale via des essais et en collectant des données sur plusieurs vols de l'aéronef dans des conditions similaires (ex. même longueur de piste, même charge de l'avion, etc.), ou par simulation, à partir de modèles mathématiques connus en soi reconstituant la thermodynamique du moteur et les lois de régulation appliquées au moteur.

L'invention ne se limite donc pas à un type particulier de moteur, mais permet d'envisager une réduction de la poussée pour d'autres moteurs que ceux envisagés classiquement dans l'aviation civile, avec les avantages qui en découlent (i.e. diminution des contraintes sur les éléments moteur et augmentation de leur fiabilité, réduction de la consommation en carburant et du bruit généré).

L'invention offre en outre la possibilité de réduire la poussée de l'aéronef en ajustant simultanément plusieurs valeurs de consigne. Elle s'adapte ainsi aux moteurs dont la poussée ne dépend pas d'un seul paramètre, tel que notamment la température extérieure, mais de plusieurs paramètres. Pour de tels moteurs, l'ajustement d'une ou de plusieurs valeurs de consigne simultanément pourra être décidé en fonction d'un compromis complexité/performance (ou précision).

Par ailleurs, conformément à l'invention, on utilise avantageusement pour réduire la poussée, des valeurs courantes de variable(s) de fonctionnement du moteur (c'est-à-dire réelles, représentatives de l'état courant des variables de fonctionnement), et non pas des valeurs fictives déterminées par le pilote de l'aéronef. Ces valeurs courantes peuvent être notamment des mesures fournies par des capteurs de l'aéronef ou être reconstituées à partir de telles mesures.

La régulation de la poussée conformément à l'invention est ainsi réalisée avec davantage de précision qu'avec le mécanisme cité précédemment utilisé dans l'aviation civile.

Il convient de noter que la solution proposée par l'invention peut être avantageusement entièrement intégrée dans le dispositif de régulation du moteur (FADEC).

Préférentiellement, les variables de fonctionnement utilisées pour déterminer les valeurs de décrément des valeurs de consigne sont :

- une température en entrée du moteur, telle que la température atmosphérique ou température ambiante ; et/ou
- une pression atmosphérique en entrée du moteur.

Les lois de régulation des moteurs dépendent en effet plus particulièrement de ces variables de fonctionnement, et notamment de la température atmosphérique en entrée du moteur.

Les valeurs courantes de ces variables peuvent être obtenues à partir de mesures réalisées par des capteurs de l'aéronef.

Ces exemples de variables de fonctionnement utilisées pour déterminer les valeurs de décrément à appliquer sur les valeurs de consigne influençant la poussée, fournies par le dispositif de régulation, ne sont pas limitatifs. On pourrait en variante envisager d'autres variables de fonctionnement dans le cadre de l'invention comme par exemple une température interne au moteur, ou la température de sortie des gaz d'échappement, etc.

Par ailleurs, on peut également envisager que la ou les valeurs de décrément extraites de la table pour chaque paramètre dépendent en outre d'une vitesse courante et/ou d'une charge de l'aéronef.

Lorsque la phase de vol est une phase de décollage de l'aéronef, la valeur de décrément extraite de la table pour chaque paramètre peut dépendre également d'une longueur de piste empruntée par l'aéronef lors de la phase de décollage.

Ces différents facteurs permettent d'améliorer encore davantage la précision du détarage, puisque l'ajustement de la ou des valeurs de consigne est adapté aux conditions de vol de l'aéronef.

Ainsi par exemple, l'invention permet, lorsque la valeur de décrément dépend de la longueur de piste, d'adapter la poussée du moteur tout au long du décollage.

Dans un mode particulier de réalisation de l'invention, au cours de l'étape d'ajustement, on ajuste la valeur de consigne de la vitesse de rotation du compresseur et la valeur de consigne de la marge au pompage.

Ce mode de réalisation est particulièrement avantageux lorsqu'on envisage le détarage de la poussée d'un turboréacteur à double flux et à tuyère variable. Un tel moteur est utilisé notamment dans l'aviation militaire. Il s'agit par exemple du moteur M88 développé par SNECMA.

Pour un tel moteur, la poussée dépend à la fois du régime de rotation du compresseur basse pression du turboréacteur et de la marge au pompage de ce compresseur. Ces deux facteurs sont influencés respectivement par le débit de carburant injecté dans la chambre de combustion du moteur et par la section de la tuyère.

Dans un autre mode de réalisation, au cours de l'étape d'ajustement, la valeur de décrément appliquée à la valeur de consigne est pondérée par un facteur de pondération inférieur à 1.

Ce facteur de pondération peut dépendre notamment de l'avancement de la phase de vol.

On peut ainsi appliquer une valeur de décrément dégressive aux valeurs de consigne en fonction de l'avancement de la phase de vol. Ceci permet de diminuer progressivement l'impact de l'ajustement réalisé sur les valeurs de consigne lorsque la phase de vol concernée par cet ajustement se termine. Cette diminution progressive répond à un souci d'ergonomie vis-à-vis du pilote de l'aéronef et vise notamment à éviter un retour brusque à une poussée maximale qui peut s'avérer désagréable ou surprenant pour le pilote.

La pondération de la valeur de décrément permet également de pouvoir désactiver quasi instantanément l'ajustement des valeurs de consigne (en appliquant un facteur de pondération nul) de façon à ce que le moteur bénéficie d'une poussée maximale. Cette désactivation de l'ajustement peut faire suite par exemple à la détection d'un événement particulier tel une requête du pilote de l'aéronef.

Dans un mode particulier de réalisation, les différentes étapes du procédé d'ajustement sont déterminées par des instructions de programmes d'ordinateurs.

En conséquence, l'invention vise aussi un programme d'ordinateur sur un support d'informations, ce programme étant susceptible d'être mis en oeuvre dans un dispositif d'ajustement ou plus généralement dans un ordinateur, ce programme comportant des instructions adaptées à la mise en oeuvre des étapes d'un procédé d'ajustement tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Un exemple non revendiqué vise également l'utilisation, pour réguler la poussée d'un moteur à turbine à gaz propulsant un aéronef lors d'une phase de vol, d'une valeur de consigne d'au moins un paramètre influençant cette poussée ajustée à l'aide d'un procédé selon l'invention.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

- la figure 1, déjà décrite, illustre l'évolution de la poussée d'un turboréacteur d'un avion civil en fonction de la température extérieure ;
- la figure 2 représente un système de régulation de la poussée d'un turboréacteur comprenant un dispositif d'ajustement illustratif ;
- la figure 3 illustre, sous forme d'ordinogramme, les principales étapes d'un procédé d'ajustement conforme à l'invention telles que mises en oeuvre par le dispositif d'ajustement de la figure 2 ; et
- la figure 4 illustre un exemple de table pouvant être utilisée pour la mise en oeuvre de l'ajustement des valeurs de consigne conformément à l'invention.

Description détaillée de l'invention

La **figure 2** représente, de façon schématique, un système 1 de régulation de la poussée d'un moteur à turbine à gaz propulsant un aéronef.

Dans l'exemple considéré ici, le moteur à turbine à gaz dont on envisage la régulation de la poussée est un turboréacteur à double corps double flux mélangés disposant d'une tuyère d'éjection des gaz d'échappement à section variable et propulsant un avion. Il s'agit par exemple d'un moteur M88 développé par SNECMA.

Bien entendu, l'invention s'applique à tout autre type de moteur à turbine à gaz d'aéronef.

On s'intéresse plus particulièrement ici à la réduction (i.e. au détarage), lors d'une phase de décollage de l'aéronef, de la poussée de ce turboréacteur par rapport à une poussée maximale de référence dite « Plein Gaz Post Combustion » ou PGPC.

Cette hypothèse concernant la phase de vol n'est toutefois pas limitative, et l'invention peut également être appliquée pour réguler et réduire la poussée du turboréacteur lors d'autres phases de vol de l'aéronef, telles que notamment lors d'une phase de croisière.

Il convient de noter que des mécanismes de détection automatique de la phase de vol dans laquelle se trouve l'aéronef pourront être mis en oeuvre de sorte à n'activer le détarage de la poussée que pour des phases prédéterminées (par exemple seulement lors d'une phase de décollage). De tels mécanismes sont connus en soi et ne seront pas décrits plus en détails ici.

En variante, le détarage de la poussée conformément à l'invention peut être activé (respectivement désactivé) sur détection d'une commande spécifique du pilote (ex. positionnement de la manette de pilotage de l'aéronef dans une position prédéterminée).

Le système 1 de régulation de la poussée du turboréacteur intègre ici le dispositif 2 de régulation pleine autorité du turboréacteur (ou FADEC), et un dispositif 3 d'ajustement d'une valeur de consigne d'au moins un paramètre influençant la poussée du turboréacteur, conforme à l'invention dans un mode particulier de réalisation.

Dans une variante de réalisation, le dispositif 3 d'ajustement selon l'invention est intégré dans le FADEC 2.

De façon connue, la régulation de la poussée d'un turboréacteur à double corps double flux disposant d'une tuyère à section variable peut être réalisée en agissant notamment sur deux paramètres, à savoir :

- la vitesse de rotation du compresseur basse pression du turboréacteur, qui a un impact sur le régime du turboréacteur, et qui dépend du débit de carburant de la chambre de combustion principale du turboréacteur ; et
- la marge au pompage de ce compresseur, laquelle dépend directement de la section de la tuyère du turboréacteur.

Ces paramètres constituent des paramètres influençant la poussée du turboréacteur au sens de l'invention.

De façon connue, la régulation de la poussée du turboréacteur en régime maximal « Plein Gaz Post Combustion » est réalisée par le FADEC 2 : celui-ci fournit aux diverses boucles de régulation du turboréacteur, à différents instants notés t, des valeurs de consigne relatives aux paramètres précités, notées respectivement ici XN2CS(t) et PRS2CS(t). Ces valeurs de consigne sont élaborées par le FADEC à partir de lois de régulation prédéterminées, connues en soi. Les valeurs de consigne élaborées par le FADEC pour une régulation de la poussée du turboréacteur en régime maximal seront dites « nominales » dans la suite de la description.

L'invention propose un détarage de la poussée du turboréacteur lors de la phase de décollage de l'aéronef en ajustant les valeurs de consigne « Plein Gaz Post Combustion », XN2CS(t) et PRS2CS(t), fournies à l'instant t par le FADEC 2, à l'aide de valeurs de décrément notées $\Delta$XN2(t) et $\Delta$PRS2(t) déterminées par le dispositif 3 d'ajustement. Par souci de simplification des notations, on omettra la dépendance par rapport à l'instant t des variables XN2CS(t), PRS2CS(t), $\Delta$XN2(t) et $\Delta$PRS2(t) dans la suite de la description.

Les valeurs de décrément $\Delta$XN2 et $\Delta$PRS2 sont avantageusement déterminées, conformément à l'invention, à partir de valeurs courantes de variables de fonctionnement du turboréacteur (c'est-à-dire à partir de valeurs réelles, représentatives de l'état courant de ces variables de fonctionnement).

Dans le mode de réalisation décrit ici, on considère comme variables de fonctionnement, la température en entrée du turboréacteur notée T2 et la pression atmosphérique ambiante du turboréacteur notée Pamb. Les valeurs courantes de ces variables de fonctionnement sont mesurées à l'aide de capteurs 4 de température et de pression connus en soi, et déjà présents dans l'aéronef.

Par ailleurs, dans le mode de réalisation décrit ici, les valeurs de décrément déterminées par le dispositif 3 d'ajustement dépendent en outre d'autres facteurs que les variables de fonctionnement T2 et Pamb, à savoir :

- de la vitesse courante de l'aéronef, notée CurMACH, reconstituée à partir de mesures réalisées notamment par des capteurs de position 4 de l'aéronef, selon des principes connus de l'homme du métier ; et
- d'informations fournies par le pilote de l'aéronef concernant notamment :

  ◦ la longueur disponible (notée L) de la piste empruntée par l'aéronef lors de la phase de décollage ; et
  ◦ la configuration (notée CH) de charge de l'aéronef (ex. masse à vide, masse des emports, etc.).

Le dispositif 3 d'ajustement dispose ici de l'architecture matérielle d'un ordinateur.

Il comporte notamment un processeur 3A, une mémoire vive 3B, une mémoire morte 3C et une mémoire flash non volatile 3D.

Le dispositif 3 d'ajustement comprend également des moyens de communication 3E avec les capteurs 4 de l'aéronef (capteur de température, de pression, de position, etc.), des moyens d'interface 3F avec le pilote de l'aéronef permettant notamment à celui-ci de fournir les informations concernant la longueur de piste disponible et la charge de l'aéronef, ainsi que des moyens 3G de communication avec le FADEC 2. Les moyens de communication 3E et 3G intègrent par exemple des bus de données numériques connus en soi, permettant à diverses entités électroniques de communiquer entre elles.

Les informations fournies par le pilote via l'interface 3F sont mémorisées dans la mémoire flash non volatile 3D.

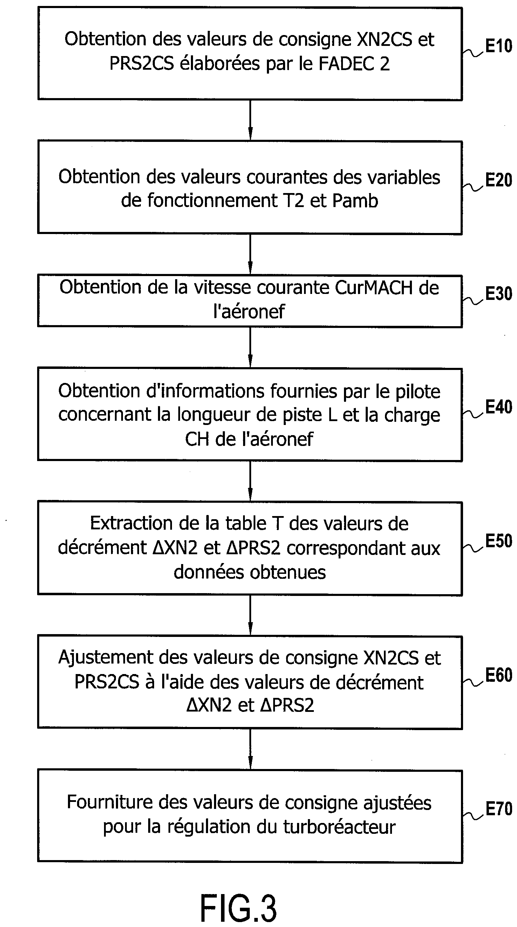

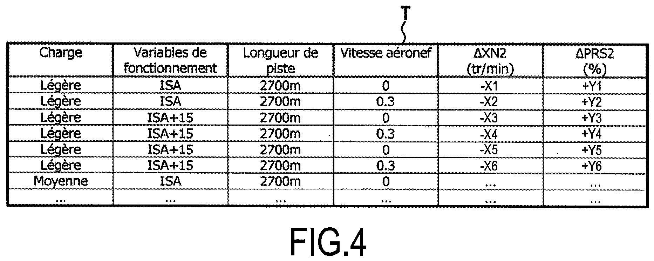

La mémoire morte 3C constitue un support d'enregistrement conforme à l'invention, lisible par le processeur 3A et sur lequel est enregistré un programme d'ordinateur conforme à l'invention, comportant des instructions pour l'exécution des étapes d'un procédé d'ajustement selon l'invention décrit maintenant en référence aux figures 3 et 4.

La **figure 3** illustre les principales étapes mises en oeuvre par le dispositif 3 d'ajustement lors de la phase de décollage de l'aéronef pour ajuster les valeurs de consigne nominales XN2CS(t) et PRS2CS(t) fournies à l'instant t par le FADEC 2 afin de réduire la poussée du turboréacteur par rapport au régime PGPC.

On suppose ici que les valeurs de consigne XN2CS et PRS2CS évaluées par le FADEC 2 sont transmises au dispositif 3 d'ajustement, via les moyens de communication 3F (étape E10).

Pour ajuster ces valeurs, le dispositif 3 d'ajustement agrège différents types de données.

Ainsi, il obtient, via ses moyens de communications 3D, les valeurs courantes de la température T2 à l'entrée du turboréacteur et de la pression atmosphérique ambiante Pamb mesurées par les capteurs 4 (étape E20).

Le dispositif 3 d'ajustement obtient par ailleurs des capteurs 4, des mesures lui permettant de reconstituer la vitesse courante CurMACH de l'aéronef (étape E30).

Enfin, il obtient également, en consultant sa mémoire non volatile 3D, les informations complémentaires fournies par le pilote concernant notamment la longueur L de piste disponible pour le décollage de l'aéronef et la charge CH de l'aéronef au décollage (étape E40).

On notera que les étapes E20, E30 et E40 peuvent être mises en oeuvre indifféremment simultanément ou au contraire, successivement.

Le dispositif 3 d'ajustement utilise alors les données ainsi agrégées pour déterminer des valeurs de décrément à appliquer sur les valeurs de consigne nominales XN2CS et PRS2CS fournies par le FADEC 2.

Plus précisément, il consulte à l'aide de ces données, une table T préétablie, stockée dans sa mémoire flash non volatile 3D, et extrait de cette table, des valeurs de décrément pour la vitesse de rotation du compresseur basse pression du turboréacteur et la marge au pompage de ce compresseur associées auxdites données.

Par table, on entend ici tout type de structure ou de base de données à 2 dimensions ou plus, permettant de stocker des données et de les associer entre elles.

Dans le mode de réalisation décrit ici, une table T est préétablie pour chaque phase de vol (ex. une table pour la phase de décollage, une table pour la phase de croisière). Cette table T est préétablie pour un type de moteur particulier, à savoir ici, pour un moteur du même type que le turboréacteur dont on souhaite réguler la poussée. Ainsi, si le turboréacteur dont on souhaite réguler la poussée est un moteur M88 développé par SNECMA, on utilise une table T préétablie pour un moteur de type M88.

En variante, on peut envisager d'établir une table qui dépend spécifiquement du turboréacteur dont on souhaite réguler la poussée.

Un exemple d'une telle table T est illustré à la **figure 4** pour la phase de décollage.

Dans le mode de réalisation décrit ici, la table T associe à différentes valeurs des données de fonctionnement agrégées par le dispositif 3 d'ajustement (autrement dit à différentes valeurs des variables de fonctionnement T2 et Pamb et de la vitesse de l'aéronef, ainsi qu'à différentes configurations de charge de l'aéronef et de longueurs de la piste de décollage), un réseau de valeurs de décrément correspondantes à appliquer sur les valeurs de consigne nominales XN2CS(t) et PRS2CS(t) pour limiter la poussée du turboréacteur.

Ces valeurs de décrément ont été choisies de sorte à assurer à chaque instant une poussée suffisante au turboréacteur pour que l'aéronef puisse décoller en utilisant la longueur de piste disponible L mais sans toutefois exploiter tout le potentiel propulsif du turboréacteur. Cette logique d'établissement de la table T permet ainsi un gain acoustique, ainsi qu'un gain en termes de consommation de carburant et de potentiel comparé à un décollage en régime maximal PGPC.

Les valeurs de décrément reportées dans la table T peuvent être établies lors d'une étape préliminaire, par exemple à partir de résultats de simulations réalisées à l'aide de modèles numériques mathématiques connus en soi permettant de reconstituer la thermodynamique du turboréacteur et prenant en compte les lois de régulation appliquées par le FADEC 2. Ces modèles sont propres à chaque turboréacteur et sont classiquement fournis par les motoristes.

Ainsi, à titre illustratif, pour un aéronef de type Rafale propulsé par un moteur M88 développé par SNECMA, on peut, lors de cette étape préliminaire, calculer dans un premier temps à partir d'un modèle avion de type Rafale, la poussée minimale nécessaire à chaque instant pour que l'aéronef décolle sur toute la longueur de piste disponible s'offrant à lui (ex. 2700m sur la piste A). Cette poussée minimale dépend des conditions atmosphériques (température et pression atmosphériques), de la longueur de piste, et de la charge et de la vitesse de l'aéronef.

Puis, on détermine, à l'aide d'un modèle du moteur M88, les consignes de régime compresseur basse pression et la marge au pompage correspondant à cette poussée minimale. On obtient par ailleurs à l'aide de ce modèle, les valeurs de consigne nominales de régime compresseur basse pression et la marge au pompage correspondant à une régulation du turboréacteur en régime maximal PGPC.

On déduit ensuite de ces consignes et des valeurs de consigne nominales, les valeurs de décrément à reporter dans la table T.

En variante, les valeurs de la table T peuvent être établies de manière expérimentale, via des essais réalisés sur le turboréacteur.

Le dispositif 3 d'ajustement extrait donc de la table T les valeurs de décrément ΔXN2 et ΔPRS2 des consignes de vitesse de rotation du compresseur basse pression du turboréacteur et de la marge au pompage de ce compresseur associées aux données agrégées lors des étapes E20, E30 et E40.

Il convient de noter que lorsque les données obtenues lors des étapes E20, E30 et E40 ne correspondent pas exactement aux valeurs reportées dans la table T, le dispositif 3 d'ajustement extrait de la table T les valeurs de décrément correspondant aux valeurs reportées dans la table les plus proches encadrant les données obtenues lors des étapes E20, E30 et E40, puis effectue une interpolation numérique (ex. interpolation linéaire) entre les valeurs de décrément ainsi extraites. Le dispositif 3 d'ajustement obtient ainsi des valeurs de décrément correspondant aux données obtenues aux étapes E20, E30 et E40.

A titre illustratif, deux exemples sont donnés en référence à la table représentée sur la figure 4 :

- Exemple 1 :

On suppose que :

⚬ T2 et Pamb sont représentatives d'une température et d'une pression égales à la température et à la pression données par le modèle atmosphérique standard (aussi connu sous l'appellation de modèle ISA, International Standard Atmosphère), compte tenu de l'altitude courante de navigation de l'aéronef. Autrement dit, T2 et Pamb sont représentatives de conditions atmosphériques référencées par « ISA » dans la table T de la figure 4.
⚬ La configuration de l'aéronef est représentative d'une configuration « légère ».
⚬ La longueur de piste disponible est de 2700m.
⚬ La vitesse courante de l'avion CurMACH est estimée à 0.3 Mach.

Dans ce premier exemple, le dispositif 3 d'ajustement extrait de la table T les valeurs de décrément ΔXN2 = -x2 tr/min et ΔPRS2 = +y2 %.

- Exemple 2 :

On suppose que :

- ◦ T2 et Pamb sont représentatives de conditions atmosphériques égales à ISA+15.
- ◦ La configuration de l'aéronef est représentative d'une configuration « légère ».
- ◦ La longueur de piste disponible est de 2700m.
- ◦ La vitesse courante de l'avion CurMACH est estimée à 0.2 Mach.

Dans ce second exemple, le dispositif 3 d'ajustement extrait de la table T :

- ◦ deux valeurs de décrément pour la vitesse de rotation du compresseur basse pression, à savoir -x3 tr/min et -x4 tr/min, et
- ◦ deux valeurs de décrément pour la marge au pompage du compresseur basse pression, à savoir +y3 % et +y4 %.

Puis, il déduit les valeurs de décrément ΔXN2 et ΔPRS2 à appliquer aux valeurs de consigne à partir d'une interpolation réalisée pour ΔXN2 entre - x3 et -x4, et pour ΔPRS2, entre +y3 et +y4. Le dispositif 3 d'ajustement applique alors les valeurs de décrément ΔXN2 et ΔPRS2 ainsi extraites de la table T aux valeurs de consigne XN2CS et PRS2CS fournies par le FADEC 2 (étape E60).

Plus particulièrement, dans le mode de réalisation décrit ici, il ajuste les valeurs de consigne comme suit :

$$XN2CS(ajustée) = XN2CS + γ \times ΔXN2$$

$$PRS2CS(ajustée) = PRS2CS + γ' \times ΔPRS2$$

où $γ$ et $γ'$ désignent des facteurs de pondération, inférieurs ou égaux à 1.

Les facteurs de pondération $γ$ et $γ'$ peuvent être identiques ou distincts.

Par ailleurs, ces facteurs de pondération peuvent varier en fonction du temps, et dépendre par exemple, de l'avancement de la phase de vol. On peut ainsi désactiver progressivement le détarage de la poussée de sorte qu'à l'issue de la phase de décollage, il n'y ait plus d'ajustement des valeurs de consigne fournies par le FADEC 2.

Dans une variante de réalisation, si le dispositif 3 d'ajustement détecte une commande du pilote visant à bénéficier de la poussée maximale PGPC ou un autre type d'événement prédéterminé (ex. une position particulière de la manette de pilotage de l'aéronef) indiquant que la poussée nominale (i.e. correspondant à la consigne délivrée par le FADEC 2 avant ajustement) est requise, les facteurs de pondération $γ$ et $γ'$ sont fixés à zéro de sorte à désactiver le détarage.

Le dispositif 3 d'ajustement fournit ensuite les valeurs de consigne ajustées, XN2CS(ajustée) et PRS2CS(ajustée), aux boucles de régulation du turboréacteur (étape E70).

La régulation du turboréacteur est alors réalisée sur la base des valeurs de consigne ainsi ajustées, de sorte que la poussée du turboréacteur est effectivement réduite par rapport à la poussée maximale PGPC.

Dans le mode de réalisation décrit ici, le détarage de la poussée du turboréacteur double corps double flux est réalisé en ajustant à la fois la valeur de consigne relative à la vitesse de rotation du compresseur basse pression du turboréacteur et la valeur de consigne relative à la marge au pompage de ce compresseur.

Dans une variante sous-optimale de réalisation, on peut envisager de n'ajuster qu'une seule de ces deux valeurs.

Dans une autre variante encore, on peut envisager d'ajuster d'autres paramètres influençant la poussée du turboréacteur (en complément des deux paramètres précités ou à la place de l'un ou de ces deux paramètres), tel que par exemple une richesse d'un mélange de combustion du turboréacteur. La table T sera alors adaptée pour refléter les valeurs de décrément permettant l'ajustement de cette richesse du mélange de combustion en fonction des données agrégées aux étapes E20, E30 et E40.

Par ailleurs, dans le mode de réalisation décrit ici, on envisage de réduire la poussée du turboréacteur par rapport à une poussée maximale « Plein Gaz Post Combustion ». En variante, on peut envisager de réduire la poussée du turboréacteur par rapport à une autre poussée de référence, inférieure à la poussée PGPC, telle que par exemple par rapport à une poussée intermédiaire Post Combustion , une poussée Plein Gaz sec, ou encore une poussée intermédiaire sec, connues en soi.

**EP 2 864 616 B1**

**Revendications**

1. Procédé d'ajustement d'une valeur de consigne (XN2CS, PRS2CS) d'au moins un paramètre influençant une poussée d'un moteur à turbine à gaz propulsant un aéronef lors d'une phase de vol de cet aéronef, ce procédé comprenant :

   - une étape (E20) d'obtention d'une valeur courante d'au moins une variable de fonctionnement (T2, Pamb) du moteur ;
   - une étape (E50) d'extraction d'une table préétablie (T), d'une valeur de décrément ($\Delta$XN2,$\Delta$PRS2) pour ledit au moins un paramètre associée à la valeur courante de ladite au moins une variable de fonctionnement du moteur ; et
   - une étape (E60) d'ajustement de la valeur de consigne dudit au moins un paramètre en lui appliquant la valeur de décrément extraite de la table.

2. Procédé selon la revendication 1 dans lequel ladite au moins une variable de fonctionnement du moteur est choisie parmi :

   - une température (T2) en entrée du moteur ; et
   - une pression atmosphérique (Pamb) en entrée du moteur.

3. Procédé selon la revendication 1 ou 2 dans lequel ledit moteur est un turboréacteur et ledit au moins un paramètre est choisi parmi :

   - une vitesse de rotation d'un compresseur du turboréacteur ;
   - une marge au pompage de ce compresseur ; et
   - une richesse d'un mélange de combustion du turboréacteur.

4. Procédé selon la revendication 3 dans lequel, au cours de l'étape d'ajustement (E60), on ajuste la valeur de consigne (XN2CS) de la vitesse de rotation du compresseur et la valeur de consigne (PRS2CS) de la marge au pompage.

5. Procédé selon l'une quelconque des revendications 1 à 4 dans lequel la valeur de décrément extraite de la table pour chaque paramètre dépend en outre d'une vitesse courante (CurMACH) et/ou d'une charge (CH) de l'aéronef.

6. Procédé selon l'une quelconque des revendications 1 à 5 dans lequel ladite phase de vol est une phase de décollage de l'aéronef et la valeur de décrément extraite de la table pour chaque paramètre dépend en outre d'une longueur (L) de piste empruntée par l'aéronef lors de ladite phase de décollage.

7. Procédé selon l'une quelconque des revendications 1 à 6 dans lequel au cours de l'étape d'ajustement (E60), la valeur de décrément appliquée à la valeur de consigne est pondérée par un facteur de pondération inférieur à 1.

8. Procédé selon la revendication 7 dans lequel le facteur de pondération dépend de l'avancement de la phase de vol.

9. Programme d'ordinateur comportant des instructions pour l'exécution des étapes du procédé selon l'une quelconque des revendications 1 à 8 lorsque ledit programme est exécuté par un ordinateur.

**Patentansprüche**

1. Verfahren zum Einstellen eines Referenzwerts (XN2CS, PRS2CS) mindestens eines Parameters, der einen Schub eines Gasturbinentriebwerks beeinflusst, das ein Flugzeug während einer Flugphase des Flugzeugs antreibt, wobei das Verfahren umfasst:

   - einen Schritt (E20) des Erhaltens eines aktuellen Werts mindestens einer Betriebsvariable (T2, Pamb) des Triebwerks,
   - einen Schritt (E50) des Extrahierens eines Dekrementwerts ($\Delta$XN2, $\Delta$PRS2) für den mindestens einen Parameter, der dem aktuellen Wert der mindestens einen Betriebsvariable des Motors zugeordnet ist, aus einer vorab erstellten Tabelle (T), und
   - einen Schritt (E60) des Einstellens des Referenzwerts des mindestens einen Parameters durch Anwenden des aus der Tabelle extrahierten Dekrementwerts darauf.

**2.** Verfahren gemäß Anspruch 1, wobei die mindestens eine Betriebsvariable des Triebwerks ausgewählt ist aus:

- einer Temperatur (T2) am Triebwerkeingang und
- einem Atmosphärendruck (Pamb) am Triebwerkeingang.

**3.** Verfahren gemäß Anspruch 1 oder 2, wobei das Triebwerk ein Turbotriebwerk ist und wobei der mindestens eine Parameter ausgewählt ist aus:

- einer Drehzahl eines Kompressors des Turbotriebwerks,
- einer Pumpgrenze dieses Kompressors und
- einem Mischungsverhältnis eines Treibstoffgemischs des Turbotriebwerks.

**4.** Verfahren gemäß Anspruch 3, wobei während des Schritts des Einstellens (E60) der Referenzwert (XN2CS) der Drehzahl des Kompressors und der Referenzwert (PRS2CS) der Pumpgrenze eingestellt werden.

**5.** Verfahren gemäß einem der Ansprüche 1 bis 4, wobei der für jeden Parameter aus der Tabelle extrahierte Dekrementwert ferner von einer aktuellen Geschwindigkeit (CurMACH) und/oder einer Last (CH) des Flugzeugs abhängt.

**6.** Verfahren gemäß einem der Ansprüche 1 bis 5, wobei die Flugphase eine Startphase des Flugzeugs ist und der für jeden Parameter aus der Tabelle extrahierte Dekrementwert ferner von einer Länge (L) der Startbahn abhängt, die von dem Flugzeug während der Startphase genutzt wird.

**7.** Verfahren gemäß einem der Ansprüche 1 bis 6, wobei während des Schritts des Einstellens (E60) der auf den Referenzwert angewendete Dekrementwert mit einem Gewichtungsfaktor kleiner 1 gewichtet wird.

**8.** Verfahren gemäß Anspruch 7, wobei der Gewichtungsfaktor vom Fortschritt der Flugphase abhängt.

**9.** Computerprogramm, umfassend Befehle zum Ausführen der Schritte des Verfahrens gemäß einem der Ansprüche 1 bis 8, wenn das Programm von einem Computer ausgeführt wird.

**Claims**

**1.** A method of adjusting a setpoint value (XN2CS, PRS2CS) of at least one parameter that has an influence on thrust of a gas turbine engine propelling an aircraft during a stage of flight of the aircraft, the method comprising:

• a step (E20) of obtaining a current value of at least one operating variable (T2, Pamb) of the engine;
• a step (E50) of extracting from a pre-established table (T) a decrement value (ΔXN2, ΔPRS2) for said at least one parameter associated with the current value of said at least one operating variable of the engine; and
• a step (E60) of adjusting the setpoint value of said at least one parameter by applying thereto the decrement value extracted from the table.

**2.** A method according to claim 1, wherein said at least one operating variable of the engine is selected from:

• a temperature (T2) at the inlet to the engine; and
• an atmospheric pressure (Pamb) at the inlet to the engine.

**3.** A method according to claim 1 or claim 2, wherein said engine is a turbojet and said at least one parameter is selected from:

• a speed of rotation of a compressor of the turbojet;
• a surge margin of the compressor; and
• a richness of a combustion mixture of the turbojet.

**4.** A method according to claim 3, wherein, during the adjustment step (E60), the setpoint value (XN2CS) of the speed of rotation of the compressor and the setpoint value (PRS2CS) of the surge margin are adjusted.

**5.** A method according to any one of claims 1 to 4, wherein the decrement value extracted from the table for each parameter also depends on a current speed (CurMACH) and/or a load (CH) of the aircraft.

6. A method according to any one of claims 1 to 5, wherein said stage of flight is a stage of the aircraft taking off and the decrement value extracted from the table for each parameter also depends on a length (L) of runway used by the aircraft during said takeoff stage.

7. A method according to any one of claims 1 to 6, wherein during the adjustment step (E60), the value of the decrement applied to the setpoint value is weighted by a weighting factor of less than 1.

8. A method according to claim 7, wherein the weighting factor depends on the state of advance of the flight stage.

9. A computer program including instructions for executing steps of the method according to any one of claims 1 to 8 when said program is executed by a computer.

FIG.1

(ART ANTERIEUR)

FIG.2

Obtention des valeurs de consigne XN2CS et PRS2CS élaborées par le FADEC 2 — E10

Obtention des valeurs courantes des variables de fonctionnement T2 et Pamb — E20

Obtention de la vitesse courante CurMACH de l'aéronef — E30

Obtention d'informations fournies par le pilote concernant la longueur de piste L et la charge CH de l'aéronef — E40

Extraction de la table T des valeurs de décrément ΔXN2 et ΔPRS2 correspondant aux données obtenues — E50

Ajustement des valeurs de consigne XN2CS et PRS2CS à l'aide des valeurs de décrément ΔXN2 et ΔPRS2 — E60

Fourniture des valeurs de consigne ajustées pour la régulation du turboréacteur — E70

## FIG.3

T

| Charge | Variables de fonctionnement | Longueur de piste | Vitesse aéronef | ΔXN2 (tr/min) | ΔPRS2 (%) |
|--------|------------------------------|-------------------|-----------------|----------------|-----------|
| Légère | ISA | 2700m | 0 | -X1 | +Y1 |
| Légère | ISA | 2700m | 0.3 | -X2 | +Y2 |
| Légère | ISA+15 | 2700m | 0 | -X3 | +Y3 |
| Légère | ISA+15 | 2700m | 0.3 | -X4 | +Y4 |
| Légère | ISA+15 | 2700m | 0 | -X5 | +Y5 |
| Légère | ISA+15 | 2700m | 0.3 | -X6 | +Y6 |
| Moyenne | ISA | 2700m | 0 | ... | ... |
| ... | ... | ... | ... | ... | ... |

# FIG.4

**EP 2 864 616 B1**

## RÉFÉRENCES CITÉES DANS LA DESCRIPTION

**Documents brevets cités dans la description**

- FR 2890939 A1

- US 2009222187 A1